# EUROPEAN PATENT APPLICATION

(11) **EP 4 787 580 A1**
(43) Date of publication of application: **05.08.2026**
(21) Application number: 25867339.1
(22) Date of filing: 21.04.2025
(51) Int. Cl.: H01M 50/289, H01M 50/242

(54) **BATTERY PACK AND ELECTRIC DEVICE**

(30) Priority: 05.12.2024 CN 202423005144 U; 05.12.2024 CN 202411785259; 05.12.2024 CN 202411785225; 05.12.2024 CN 202423005194 U
(71) Applicant: Eve Energy Co., Ltd, Huizhou, Guangdong 516006 (CN)
(72) Inventor: YI, Guogao, Huizhou, Guangdong 516006 (CN); LI, Laocong, Huizhou, Guangdong 516006 (CN)
(74) Representative: Zhu, Puxing
(86) International application number: PCT/CN2025/090112
(87) International publication number: WO 2026/118355

(57) **Abstract**

The application provides a battery pack and an electrical device. The battery pack includes a cell assembly and a heat exchange assembly. The cell assembly includes a plurality of battery cells, a side surface of each battery cell where an output terminal is located includes a functional region and a non-functional region, and at least one of the output terminal, a liquid injection port, or an explosion-proof valve is provided on the functional region. The heat exchange assembly includes a first heat exchange component and a first support member, and the first support member abuts between the adjacent first heat exchange component and a non-functional region.

## Description

The present application claims priority to a Chinese patent application No. 202411785225.2 filed with the China National Intellectual Property Administration (CNIPA) on December 5, 2024;
a Chinese patent application No. 202423005194.2 filed with the CNIPA on December 5, 2024:
a Chinese patent application No. 202423005144.4 filed with the CNIPA on December 5, 2024; and
a Chinese patent application No. 202411785259.1 filed with the CNIPA on December 5, 2024. The entire contents of the above applications are incorporated herein by reference.

### TECHNICAL FIELD

The present application relates to a field of battery technology, specifically to a battery pack and an electrical device.

### BACKGROUND

A battery pack mainly comprises a housing and battery cells encapsulated within the housing.

In related art, the housing also contains a liquid cooling plate provided in the housing, which attaches to an upper side of the battery cells to dissipate heat from the battery cells.

### SUMMARY

When the battery pack vibrates, the liquid cooling plate tends to impact the battery cells, causing functional structures such as output terminals on a surface of the battery cells to be damaged by the liquid cooling plate.

The present application provides a battery pack, comprising:
a cell assembly, wherein the cell assembly comprises a plurality of battery cells, a side surface of each battery cell where an output terminal is located comprises a functional region and a non-functional region, and at least one of the output terminal, a liquid injection port, or an explosion-proof valve is provided in the functional region; and
a heat exchange assembly, wherein the heat exchange assembly comprises a first heat exchange component and a first support member, the first heat exchange component is disposed on a side of the battery cell where the output terminal is located, a side of the first support member abuts the adjacent first heat exchange component, and another side of the first support member abuts a non-functional region of an adjacent one of the battery cells.

The present application also provides an electrical device comprising the battery pack as described above. Beneficial Effects

In embodiments of the present application, when the battery pack vibrates, at least a portion of an impact force from the first heat exchange component transfers through the first support member to the non-functional region of the battery cell, thereby preventing the entire impact force of the first heat exchange component from directly acting on the functional region of the battery cell, thereby ultimately mitigating a technical problem where structures in the functional region of the battery cell are easily damaged by the first heat exchange component.

### BRIEF DESCRIPTION OF THE DRAWINGS

FIG. 1 is a schematic structural view of a battery pack provided by an embodiment of the present application.
FIG. 2 is a cross-sectional view of the battery pack shown in FIG. 1 along an A-A direction.
FIG. 3 is a partial enlarged view at an X region in FIG. 2.
FIG. 4 is an exploded view of a cell assembly and a heat exchange assembly of the battery pack shown in FIG. 2.
FIG. 5 is a schematic structural view of a third support member provided by an embodiment of the present application.
FIG. 6 is a schematic structural view of a second type of cover assembly provided by an embodiment of the present application.
FIG. 7 is a schematic structural view of a fourth support member of the cover assembly shown in FIG. 6.
FIG. 8 is an exploded view of the cover assembly shown in FIG. 6.
FIG. 9 is an exploded view of a housing, a first heat exchange component, and a cell assembly provided by an embodiment of the present application.
FIG. 10 is an assembly view of the housing and the first heat exchange component shown in FIG. 9.
FIG. 11 is a cross-sectional view of the housing and the first heat exchange component shown in FIG. 10 along a B-B direction.
FIG. 12 is a partial enlarged view at a Y region in FIG. 11.
FIG. 13 is an exploded view of a first positioning structure shown in FIG. 12.
FIG. 14 is a perspective view of the battery pack shown in FIG. 1.
FIG. 15 is an exploded view of the battery pack shown in FIG. 14.
FIG. 16 is a partial enlarged view at a Z region in FIG. 14.

### DETAILED DESCRIPTION

An embodiments of the present application provides a battery pack, which applies to an electrical device. The electrical device includes, but is not limited to, a vehicle, a smart wearable device, a mobile terminal, a home appliance, or a medical device, and embodiments of the present application impose no limitation thereon. A vehicle includes, but is not limited to, a car, a bus, a train, a ship, an aircraft, and the like. A smart wearable device includes, but is not limited to, a smart watch, a smart bracelet, a cervical massager, and the like. A mobile terminal includes, but is not limited to, a smartphone, a laptop, a tablet, a point-of-sale (POS) terminal. A home appliance includes, but is not limited to, a television, a washing machine, an air conditioner, a rice cooker, a smart vacuum cleaner, a smart lamp, and the like. A medical device includes, but is not limited to, an infrared thermometer, a pulse oximeter, a body composition analyzer, and the like. The battery pack also applies to an energy storage device, and embodiments of the present application impose no limitation thereon.

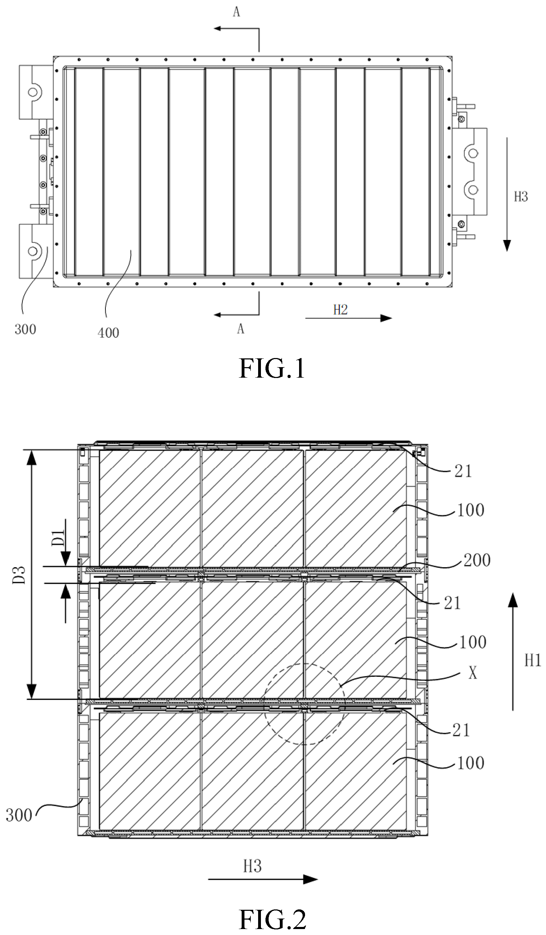

Referring to FIGs. 1, 2, and 3, the battery pack comprises a cell assembly 100 and a heat exchange assembly 200. The cell assembly 100 comprises a plurality of battery cells 11, a side surface of each battery cell 11 where an output terminal 111 is located comprises a functional region 112 and a non-functional region 113, and at least one of the output terminal 111, a liquid injection port, or an explosion-proof valve is provided in the functional region 112. The heat exchange assembly comprises a first heat exchange component 21 and a first support member 222, the first heat exchange component 21 is disposed on a side of the battery cell 11 where the output terminal 111 is located, a side of the first support member 222 abuts the adjacent first heat exchange component 21, and another side of the first support member 222 abuts the non-functional region 113 of an adjacent one of the battery cells 11.

Thus, when the battery pack vibrates, at least a portion of an impact force from the first heat exchange component 21 transfers through the first support member 222 to the non-functional region 113 of the battery cell 11, thereby preventing the entire impact force of the first heat exchange component 21 from directly acting on the functional region 112 of the battery cell 11, thereby ultimately mitigating a technical problem where structures in the functional region 112 of the battery cell 11 are easily damaged by the first heat exchange component 21.

It is understood that the functional region 112 may be provided with a single output terminal 111, the liquid injection port, and the explosion-proof valve, or with any two or more of the output terminal 111, the liquid injection port, and the explosion-proof valve, and embodiments of the present application impose no limitation thereon.

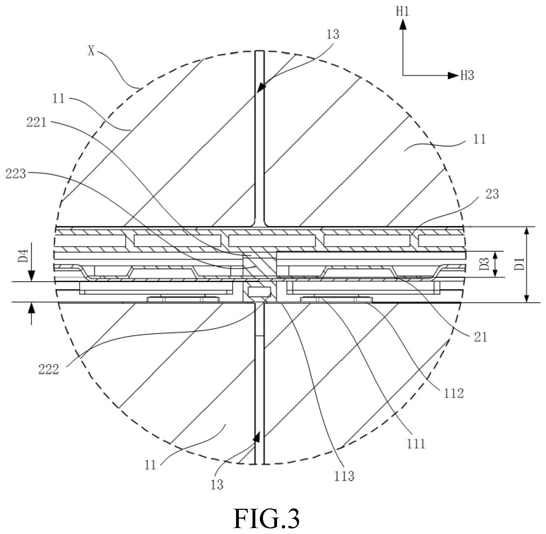

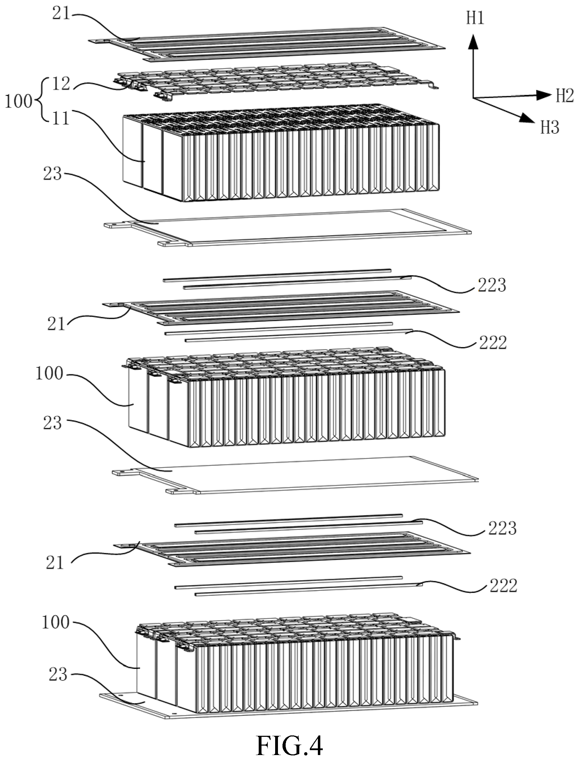

Referring to FIGs. 3 and 4, in some embodiments, the cell assembly 100 further comprises a busbar 12. The battery cell 11 is connected electrically to the busbar 12. The first heat exchange component 21 is connected to a terminal post or the busbar 12 of the adjacent cell assembly 100 via a thermally conductive adhesive.

Thus, the first support member 222 supports the first heat exchange component 21 to prevent the first heat exchange component 21 from damaging structures such as the terminal post or the busbar 12 of the adjacent cell assembly 100.

In some embodiments, the first support member 222 comprises an insulating material to prevent the first support member 222 from causing a short circuit within the battery pack. For example, the first support member 222 comprises plastic. Alternatively, the first support member 222 comprises a metal material, and a surface of the first support member 222 is provided with an insulating layer to prevent the first support member 222 from causing a short circuit within the battery pack, and embodiments of the present application impose no limitation thereon.

In some embodiments, the first support member 222 comprises a rigid support member to ensure sufficient support strength of the first support member 222. For example, the first support member 222 comprises an epoxy resin member, a fiberglass member, or a composite member of epoxy resin and fiberglass, and embodiments of the present application impose no limitation thereon.

In some embodiments, the first support member 222 comprises a hollow structure, which provides the advantage of lower weight to reduce an overall weight of the battery pack.

Alternatively, in some other embodiments, the first support member 222 comprises a solid structure to provide greater strength. Additionally, some first support members 222 comprise a hollow structure, while some first support members 222 comprise a solid structure, and embodiments of the present application impose no limitation thereon.

A quantity of the first support member 222 may be one or multiple, and embodiments of the present application impose no limitation thereon. When the quantity of the first support member 222 is multiple, a plurality of the first support members 222 distribute a support force applied to the first heat exchange component 21 more evenly.

The first support member 222 may be disposed near a center of a corresponding first heat exchange component 21, near an edge of the corresponding first heat exchange component 21, or the plurality of the first support members 222 may be arranged along a length or width direction of the corresponding first heat exchange component 21, and embodiments of the present application impose no limitation thereon.

In some embodiments, the first support member 222 laps the adjacent battery cell 11.

For example, the first support member 222 is located on an upper side of the lapping battery cell 11, whereby the battery cell 11 supports the first support member 222, enabling the first support member 222 to provide support to the adjacent first heat exchange component 21 from bottom to top. Alternatively, the first support member 222 is located on a lower side of the lapping battery cell 11, and embodiments of the present application impose no limitation thereon.

It is understood that the first support member 222 laps the adjacent battery cell 11 via adhesion, clamping, welding, fusion, or any other method, and embodiments of the present application impose no limitation thereon.

In other words, the first support member 222 and the battery cell 11 that lap each other fix together, which prevents the first support member 222 from shifting during use, thereby improving reliability and stability of the battery pack.

In some embodiments, the cell assembly 100 comprises at least two columns of the battery cells 11. The first support member 222 laps adjacent two of the columns of the battery cells 11.

It is understood that when the battery pack vibrates, relative displacement tends to occur between adjacent two of the columns of the battery cells 11. Thus, by lapping the first support member 222 with adjacent two of the columns of the battery cells 11, a magnitude of the relative displacement between the adjacent two of the columns of the battery cells 11 is reduced, thereby improving installation stability of the cell assembly 100. Correspondingly, excessive relative displacement between adjacent two of the columns of the battery cells 11, resulting in excessive stress concentration in a region of the first heat exchange component 21 above a boundary between the adjacent two of the columns of the battery cells 11, is prevented, thereby reducing a likelihood of damage to the first heat exchange component 21.

In some embodiments, each end of the first support member 222 in a width direction laps a column of the battery cells 11. Along the width direction of the first support member 222, a width of a portion of the first support member 222 lapping each column of the battery cells 11 is greater than or equal to 3 mm.

Furthermore, a sufficiently large lapping area between the first support member 222 and each column of the battery cells 11 is ensured. On one hand, this ensures stability of a connection between the first support member 222 and each column of the battery cells 11; on the other hand, even if a certain error exists in an assembly process of the first support member 222, the first support member 222 still laps the battery cell 11.

For example, along the width direction of the first support member 222, the width of the portion of the first support member 222 lapping each column of the battery cells 11 is 3 mm, 3.7 mm, 4 mm, 4.33 mm, 4.5 mm, 4.8 mm, 5 mm, or 6 mm, and embodiments of the present application impose no limitation thereon.

In some embodiments, a width of the first support member 222 is greater than or equal to 12 mm. Thus, a sufficiently wide first support member 222 ensures the width of the portion of the first support member 222 lapping each column of the battery cells 11, thereby ensuring stability and reliability of the lap of the first support member 222.

For example, the width of the first support member 222 is 12 mm, 12.7 mm, 13 mm, 13.5 mm, 14 mm, 15.5 mm, 16 mm, 17.55 mm, or 18 mm, and embodiments of the present application impose no limitation thereon.

In some embodiments, a quantity of the cell assembly 100 is at least two, and all of the cell assemblies 100 are arranged along a first direction H1, thereby increasing an energy storage capacity of the battery pack through a plurality of cell assemblies 100.

It should be noted that the first direction H1 may be a vertical direction or another direction. In embodiments of the present application, the first direction H1 is primarily described as the vertical direction for illustrative purposes.

In some embodiments, each cell assembly 100 is provided with the first heat exchange component 21 and the first support member 222 on a same side along the first direction H1. Thus, a same side (e.g., a top) of each cell assembly 100 exchanges heat through a corresponding first heat exchange component 21, improving accuracy and reliability of temperature regulation at each cell assembly 100.

In some embodiments, each cell assembly 100 comprises a plurality of columns of the battery cells 11, and the plurality of the columns of the battery cells 11 in the same one of the cell assemblies 100 are arranged along a second direction H2. The plurality of the battery cells 11 in a same column are arranged along a third direction H3, and the first direction H1, the second direction H2, and the third direction H3 intersect pairwise.

It should be noted that the first direction H1 may be a vertical direction (or a height direction of the battery pack), the second direction H2 may be a front-rear direction (or a width direction of the battery pack), and the third direction H3 may be a left-right direction (or a length direction of the battery pack). The specific directions of the first direction H1, the second direction H2, and the third direction H3 are interchangeable, and embodiments of the present application impose no limitation thereon. In the following, embodiments of the present application continue to describe the first direction H1 as the vertical direction for illustrative purposes.

A quantity of the first support member 222 is multiple, at least two of the first support members 222 are spaced apart along the second direction H2, and each first support member 222 extends along the third direction H3.

Thus, on one hand, in a width direction of the battery pack (i.e., the second direction H2), a plurality of first support members 222 provide support to different positions of the first heat exchange component 21, making a force distribution across the first heat exchange component 21 in the width direction of the battery pack more uniform. On the other hand, in a length direction of the battery pack (i.e., the third direction H3), each first support member 222 provides support to the first heat exchange component 21 along various positions in a length direction, making the force distribution across the first heat exchange component 21 in the length direction of the battery pack more uniform.

As mentioned above, in some embodiments, the cell assembly 100 comprises at least two columns of the battery cells 11. The first support member 222 laps adjacent two of the columns of the battery cells 11.

In some embodiments, a first gap 13 is defined between adjacent two of the columns of the battery cells 11 in the same one of the cell assemblies 100, and at least one first support member 222 corresponds to at least one first gap 13 along the first direction H1.

In some embodiments, at least one first gap 13 at each cell assembly 100 corresponds to a first support member 222 along the first direction H1.

In some embodiments, each first gap 13 at at least one cell assembly 100 corresponds to a first support member 222 along the first direction H1.

In some embodiments, the first support member 222 extends along a length direction of the cell assembly 100. A ratio of a length of the first support member 222 to a length of the cell assembly 100 is greater than or equal to three-fifths. Thus, along the length direction of the cell assembly 100, the first support member 222 provides better support to more positions of the first heat exchange component 21, making a support force provided by the first support member 222 more distributed and uniform.

For example, the ratio of the length of the first support member 222 to the length of the cell assembly 100 is greater than or equal to three-fifths, four-fifths, five-sixths, six-sevenths, seven-eighths, or eight-ninths, or the length of the first support member 222 equals the length of the cell assembly 100, and embodiments of the present application impose no limitation thereon.

The above provides exemplary descriptions of the first support member 222 in embodiments of the present application.

In some embodiments, the heat exchange assembly 200 further comprises a second support member 223. The second support member 223 is located between the first heat exchange component 21 and the adjacent cell assembly 100 at a top.

In other words, between adjacent two of the cell assemblies 100, the first support member 222 is disposed between the first heat exchange component 21 and a cell assembly 100 at a bottom to support the first heat exchange component 21, while the second support member 223 is located between the first heat exchange component 21 and the cell assembly 100 at the top to directly or indirectly support the cell assembly 100 at the top.

A quantity of the second support member 223 may be one or multiple, and embodiments of the present application impose no limitation thereon.

In some embodiments, the heat exchange assembly 200 further comprises at least two second heat exchange components 23, and a side of each cell assembly 100 facing away from the first heat exchange component 21 is provided with a second heat exchange component 23 for heat exchange. Thus, the first heat exchange component 200 and the second heat exchange component 200 exchange heat with upper and lower sides of each cell assembly 100, making a temperature at various positions of each cell assembly 100 in the battery pack more accurately controllable.

The second support member 223 is then interposed between the adjacent first heat exchange component 21 and a second heat exchange component 23 to indirectly support a cell assembly 100 located above by supporting the second heat exchange component 23.

In some embodiments, a structural strength of the second heat exchange component 23 is greater than a structural strength of the first heat exchange component 21.

Thus, when the battery pack experiences an impact, an upper cell assembly 100, which is heavier, tends to directly cause a significant impact on the second heat exchange component 23 located below it. Therefore, the structural strength of the second heat exchange component 23 being greater than that of the first heat exchange component 21 effectively prevents the second heat exchange component 23 from being damaged by the direct impact of the upper cell assembly 100.

In some embodiments, a thickness of the second heat exchange component 23 is greater than a thickness of the first heat exchange component 21, making the structural strength of the second heat exchange component 23 greater than that of the first heat exchange component 21.

In some embodiments, the first heat exchange component 21 comprises a stamped plate, and the stamped plate forms a flow channel for a cooling medium to flow. The second heat exchange component 23 comprises an extruded plate, and a flow channel for the cooling medium to flow is formed in the extruded plate.

Thus, the first heat exchange component 21 formed by the stamped plate is thinner than the second heat exchange component 23 formed by the extruded plate, making the structural strength of the second heat exchange component 23 greater than that of the first heat exchange component 21.

When the first heat exchange component 21 comprises a stamped plate, two stamped plates stack and are connected to form a flow channel for the cooling medium to flow between the two stamped plates.

In some embodiments, the first heat exchange component 21 is provided with a flow channel for a cooling medium to flow, and the second support member 223 abuts a non-flow-channel region of the adjacent first heat exchange component 21, thereby preventing an impact force received by the second heat exchange component 23 from being directly transferred through the second support member 223 to a flow channel region of the first heat exchange component 21 below to prevent a short circuit within the battery pack due to leakage of the cooling medium after damage to the flow channel region of the first heat exchange component 21.

Alternatively, in some other embodiments, the first heat exchange component 21 further comprises a first heating film to heat the cell assembly 100, and embodiments of the present application impose no limitation thereon.

In some other embodiments, the second heat exchange component 23 further comprises a second heating film to heat the cell assembly 100, and embodiments of the present application impose no limitation thereon.

In some embodiments, the second support member 223 comprises an insulating material to prevent the second support member 223 from causing a short circuit within the battery pack. For example, the second support member 223 comprises plastic. Alternatively, the second support member 223 comprises a metal material, and a surface of the second support member 223 is provided with an insulating layer to prevent the second support member 223 from causing a short circuit within the battery pack, and embodiments of the present application impose no limitation thereon.

In some embodiments, the second support member 223 comprises a rigid support member to ensure sufficient support strength of the second support member 223. For example, the second support member 223 comprises an epoxy resin member, a fiberglass member, or a composite member of epoxy resin and fiberglass, and embodiments of the present application impose no limitation thereon.

Alternatively, the second support member 223 further comprises a first buffer layer 221. For example, at least a side surface of the second support member 223 is provided with the first buffer layer 221.

For example, the first buffer layer 221 abuts the second heat exchange component 23. Thus, when the battery pack vibrates, the first buffer layer 221 prevents direct contact between the second heat exchange component 23 and the first heat exchange component 21.

The first buffer layer 221 comprises a silicone foam member or any other elastic member, and embodiments of the present application impose no limitation thereon.

In some embodiments, the second support member 223 comprises a hollow structure, which provides the advantage of lower weight to reduce an overall weight of the battery pack.

Alternatively, in some other embodiments, the second support member 223 comprises a solid structure to provide greater strength. Additionally, some second support members 223 comprise a hollow structure, while some second support members 223 comprise a solid structure, and embodiments of the present application impose no limitation thereon.

In some embodiments, the second support member 223 extends along a length direction of the cell assembly 100. A ratio of a length of the second support member 223 to a length of the cell assembly 100 is greater than or equal to three-fifths. Thus, along the length direction of the cell assembly 100, the second support member 223 provides better support to more positions of the second heat exchange component 23 and the first heat exchange component 21, making a support force provided by the second support member 223 more distributed and uniform.

For example, the ratio of the length of the second support member 223 to the length of the cell assembly 100 is greater than or equal to three-fifths, four-fifths, five-sixths, six-sevenths, seven-eighths, or eight-ninths, or the length of the second support member 223 equals the length of the cell assembly 100, and embodiments of the present application impose no limitation thereon.

It is understood that a quantity of the second support member 223 may be one or multiple, and embodiments of the present application impose no limitation thereon. When the quantity of the second support member 223 is at least two, a plurality of second support members 223 enhance a support effect, thereby improving stability and reliability of the battery pack.

In some embodiments, the first support member 222 and/or the second support member 223 comprises a strip shape, which provides a support effect to the second heat exchange component 23 and the first heat exchange component 21 while preventing the second support member 223 in a plate shape from making the battery pack excessively heavy.

The second support member 223 may be disposed near a center of a corresponding first heat exchange component 21, near an edge of the corresponding first heat exchange component 21, or a plurality of second support members 223 may be arranged along a length or width direction of the corresponding first heat exchange component 21, and embodiments of the present application impose no limitation thereon.

As mentioned above, in some embodiments, all of the cell assemblies 100 are arranged along a first direction H1. Each cell assembly 100 comprises a plurality of columns of the battery cells 11, and the plurality of the columns of the battery cells 11 in the same one of the cell assemblies 100 are arranged along a second direction H2. The plurality of the battery cells 11 in a same column are arranged along a third direction H3, and the first direction H1, the second direction H2, and the third direction H3 intersect pairwise.

A quantity of the second support member 223 is multiple, at least two of the second support members 223 are spaced apart along the second direction H2, and each second support member 223 extends along the third direction H3.

Thus, on one hand, in a width direction of the battery pack (i.e., the second direction H2), a plurality of second support members 223 provide support to different positions of the second heat exchange component 23, making a force distribution across the second heat exchange component 23 in the width direction of the battery pack more uniform. On the other hand, in a length direction of the battery pack (i.e., the third direction H3), each second support member 223 provides support to the second heat exchange component 23 along various positions in a length direction, making the force distribution across the second heat exchange component 23 in the length direction of the battery pack more uniform.

As mentioned above, in some embodiments, a first gap 13 is defined between adjacent two of the columns of the battery cells 11 in the same one of the cell assemblies 100. At least one first gap 13 at each cell assembly 100 corresponds to a second support member 223 along the first direction H1.

In other words, the second support member 223 is located below the first gap 13. It is also understood that when the battery pack vibrates, relative displacement tends to occur between adjacent two of the columns of the battery cells 11, causing stress within the second heat exchange component 23 to concentrate mainly in a region below the first gap 13. Thus, by disposing the second support member 223 below the first gap 13, the second support member 223 provides support to a region of the second heat exchange component 23 corresponding to the first gap 13, reducing a likelihood of damage to the region of the second heat exchange component 23 corresponding to the first gap 13.

In some embodiments, each first gap 13 at at least one cell assembly 100 corresponds to a second support member 223 along the first direction H1.

In some embodiments, along the first direction H1, a gap between adjacent two of the cell assemblies 100 is D1, a height of the second support member 223 is D2, and a ratio of D1 to D2 ranges from 13:4 to 13:5.

This prevents the height of the second support member 223 from being too small, which could lead to insufficient structural strength or an insufficient gap between the first heat exchange component 21 and the second heat exchange component 23. Also, the height of the second support member 223 is prevented from being too large, which could waste space within the battery pack, thereby improving an energy density of the battery pack.

For example, the ratio of D1 to D2 is 13:4, 13:4.1, 13:4.4, 13:4.5, 13:4.55, 13:4.6, 13:4.8, 13:4.9, or 13:5, and embodiments of the present application impose no limitation thereon.

In some embodiments, along the first direction H1, a height by which the second support member 223 protrudes from a corresponding first heat exchange component 21 is greater than or equal to 2 mm.

This prevents the height of the second support member 223 from being too small, which could lead to insufficient structural strength or an insufficient gap between the first heat exchange component 21 and the second heat exchange component 23. Also, the height of the second support member 223 is prevented from being too large, which could waste space within the battery pack, thereby improving the energy density of the battery pack.

For example, along the first direction H1, the height by which the second support member 223 protrudes from the corresponding first heat exchange component 21 is 2 mm, 2.4 mm, 3 mm, 3.5 mm, or 4 mm, and embodiments of the present application impose no limitation thereon.

In some embodiments, along the first direction H1, a gap between adjacent two of the cell assemblies 100 is D1, a sum of a height of adjacent two of the cell assemblies 100 and the gap between the adjacent two of the cell assemblies 100 is D3, and a ratio of D1 to D3 ranges from 3:20 to 1:15.

This prevents a spacing between adjacent two of the cell assemblies 100 from being too small, which could easily cause impact damage to the first heat exchange component 21 and/or the second heat exchange component 23, and prevents the spacing between adjacent two of the cell assemblies 100 from being too large, which could reduce the energy density of the battery pack.

For example, the ratio of D1 to D3 is 3:20, 2:20, 2:15, or 1:15, and embodiments of the present application impose no limitation thereon.

In some embodiments, along the first direction H1, a gap between adjacent two of the cell assemblies 100 is D1, a height of the first support member 222 is D4, and a ratio of D1 to D4 ranges from 13:6 to 13:7.

This prevents the height of the first support member 222 from being too small, which could lead to insufficient structural strength or an insufficient gap between the first heat exchange component 21 and the cell assembly 100. Also, the height of the first support member 222 is prevented from being too large, which could waste space within the battery pack, thereby improving the energy density of the battery pack.

For example, the ratio of D1 to D4 is 13:6, 13:61, 13:623, 13:637, 13:641, 13:65, 13:67, 13:687, 13:69, or 13:7, and embodiments of the present application impose no limitation thereon.

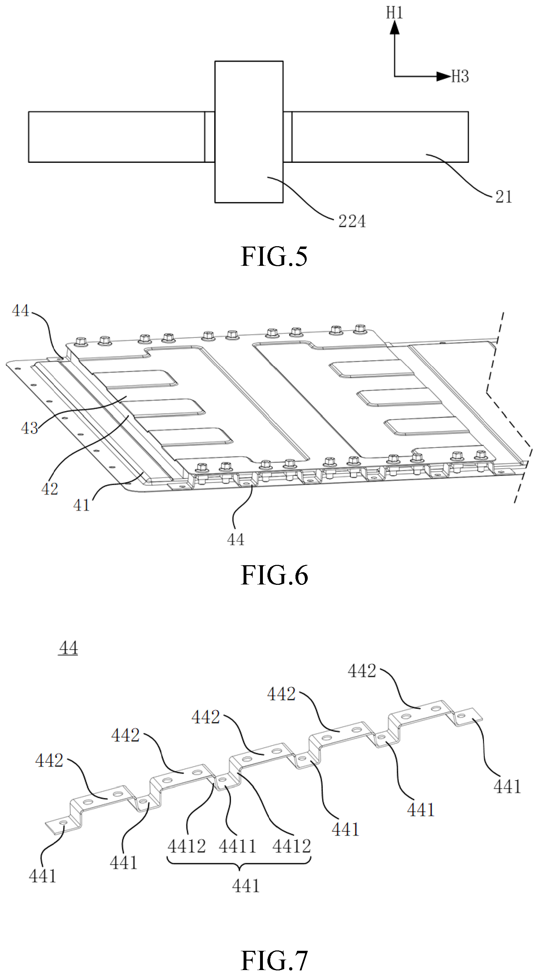

Referring to FIG. 5, in some embodiments, the heat exchange assembly 200 further comprises a third support member 224. The third support member 224 passes through the first heat exchange component 21 and is interposed between adjacent two of the cell assemblies 100.

The above provides exemplary descriptions of a support member 22 in embodiments of the present application.

As shown in FIG. 1, the battery pack further comprises a housing 300, and the cell assembly 100 and the heat exchange assembly 200 are at least partially disposed in the housing 300.

Referring to FIG. 6, the battery pack further comprises a cover assembly 400. The housing 300 has an accommodation space and an opening communicating with the accommodation space. The cover assembly 400 comprises a cover 41 and a second buffer layer 42, the cover 41 is connected to the housing 300 to seal the opening of the housing 300. The second buffer layer 42 is disposed on a side of the cover 41 facing away from the accommodation space, and a buffering performance of the second buffer layer 42 is greater than a buffering performance of the cover 41.

Thus, during an installation process, an installer may step on the second buffer layer 42 of the cover assembly 400 for installation, and the second buffer layer 42 provides a good buffering effect, thereby preventing deformation or even damage to the cover 41, thereby ultimately mitigating a technical problem where the cover 41 of the battery pack is prone to deformation or even cracking during the installation process.

It should be noted that the buffering performance of the second buffer layer 42 being greater than that of the cover 41 means that the second buffer layer 42 deforms more easily than the cover 41. Thus, when a user steps on the second buffer layer 42 of the cover assembly 400, the second buffer layer 42 deforms before the cover 41, thereby providing buffering to the cover 41.

For example, the second buffer layer 42 comprises an elastic buffer layer. The elastic buffer layer comprises foam, such as microcellular polypropylene (MMP) foam, ethylene-vinyl acetate (EVA) foam, or the like. The second buffer layer 42 also comprises an elastic rubber layer or any other structure with a buffering effect, and embodiments of the present application impose no limitation thereon.

In some embodiments, the cover assembly 400 further comprises a panel 43. The panel 43 is disposed on a side of the second buffer layer 42 facing away from the cover 41. A rigidity of the panel 43 is greater than a rigidity of the second buffer layer 42.

Thus, during the installation process, a user may step on the panel 43. Since the rigidity of the panel 43 is greater than that of the second buffer layer 42, the panel 43 is less prone to deformation such that a force applied to the panel 43 is distributed evenly to various parts of the second buffer layer 42 through the panel 43, thereby enabling the second buffer layer 42 and the panel 43 to cooperate to provide good buffering and support effects to prevent deformation or damage to the cover 41.

The panel 43 comprises a metal member, a rigid plastic member, or the like, such that the rigidity of the panel 43 is greater than that of the second buffer layer 42, and embodiments of the present application impose no limitation thereon. For example, the panel 43 comprises steel, such as high-strength steel of model DP780, or the metal member comprises iron or an alloy, and embodiments of the present application impose no limitation thereon.

In some embodiments, the cover assembly 400 further comprises a fourth support member 44. The fourth support member 44 is connected between the cover 41 and the panel 43, and a rigidity of the fourth support member 44 is greater than the rigidity of the second buffer layer 42. Thus, when an installer steps on the panel 43, on one hand, the second buffer layer 42 and the panel 43 adaptively deform to provide a good buffering effect, preventing damage to the cover assembly 400; on the other hand, the fourth support member 44 provides a good support effect to a corresponding portion of the panel 43, preventing excessive deformation of the panel 43 and the second buffer layer 42, which could cause instability for the installer.

The fourth support member 44 comprises a metal member, a rigid plastic member, or the like, and embodiments of the present application impose no limitation thereon. For example, the metal member comprises steel, such as high-strength steel of model DP780, or the metal member comprises iron or an alloy, and embodiments of the present application impose no limitation thereon.

In some embodiments, a quantity of the fourth support member 44 is at least two. Thus, a plurality of fourth support members 44 support a plurality of positions of the panel 43, not only making an installation of the panel 43 more stable but also distributing a force across the panel 43 more evenly such the force on the panel 43 is distributed to the cover 41 when an installer steps on it, thereby preventing deformation or even cracking of the cover 41.

In some embodiments, at least two of the fourth support members 44 are disposed on opposite sides of the second buffer layer 42 such that the fourth support members 44 provide good support to the panel 43 from both sides of the second buffer layer 42.

For example, each side of the second buffer layer 42 in a width direction and/or each side of the second buffer layer 42 in a length direction is provided with the fourth support member 44.

In other words, each side of the second buffer layer 42 in the width direction may be provided with the fourth support member 44, while each side of the second buffer layer 42 in the length direction is not provided with the fourth support member 44; or each side of the second buffer layer 42 in the width direction is not provided with the fourth support member 44, while each side of the second buffer layer 42 in the length direction is provided with the fourth support member 44; or each side of the second buffer layer 42 in the width direction and each side of the second buffer layer 42 in the length direction are provided with the fourth support member 44, and embodiments of the present application impose no limitation thereon.

Thus, compared to providing the fourth support member 44 on only one side of the second buffer layer 42, each side of the second buffer layer 42 in the width direction provided with the fourth support member 44 prevents collapse or insufficient support force on one side of the panel 43 in the width direction of the second buffer layer 42; each side of the second buffer layer 42 in the length direction provided with the fourth support member 44 prevents collapse or insufficient support force on one side of the panel 43 in the length direction of the second buffer layer 42.

Alternatively, in some other embodiments, the quantity of the fourth support member 44 may be one, and embodiments of the present application impose no limitation thereon.

In some embodiments, the fourth support member 44 is connected and fixed to the panel 43, which can be understood as installing the fourth support member 44 to the panel 43 to prevent displacement or detachment of the panel 43, thereby ensuring stability and reliability of the cover assembly 400.

In some embodiments, the fourth support member 44 is connected and fixed to the cover 41, which can be understood as installing the fourth support member 44 to the cover 41 to prevent displacement or detachment of the panel 43, thereby ensuring stability and reliability of the cover assembly 400.

It is also understood that when the fourth support member 44 is connected to both the panel 43 and the cover 41, if each side of the second buffer layer 42 in the width direction and/or each side of the second buffer layer 42 in the length direction is provided with the fourth support member 44, when a user steps on a position of the panel 43 corresponding to the second buffer layer 42, a portion of the panel 43 corresponding to the second buffer layer 42 recesses toward the cover 41. At this time, the fourth support member 44 limits a warping amplitude of portions of the panel 43 on both sides of the second buffer layer 42 in the length direction and/or width direction, preventing excessive deformation of the panel 43. It can also be understood that the fourth support member 44 holds the portions of the panel 43 on both sides of the second buffer layer 42 in the length direction and/or width direction, making a force distribution across the panel 43 more uniform and distributed, thereby improving stability and reliability of the cover assembly 400.

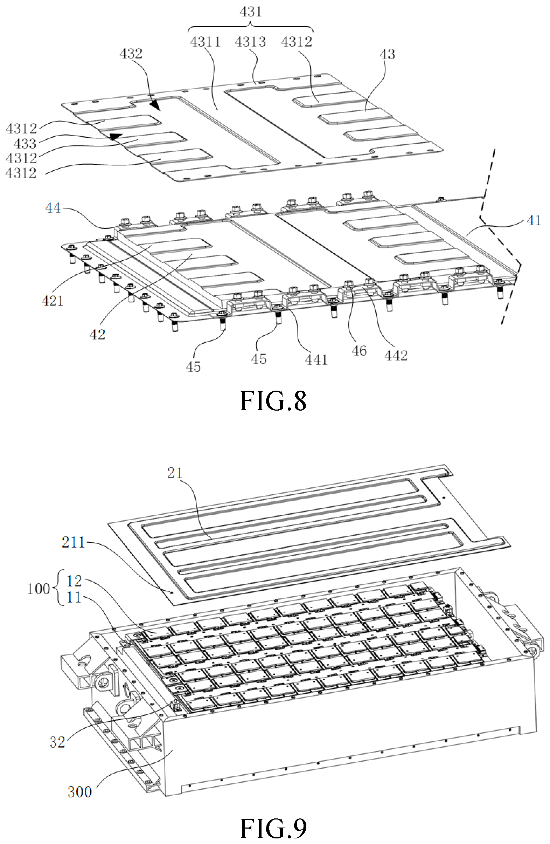

Referring to FIGs. 7 and 8, in some embodiments, the fourth support member 44 bends, and the fourth support member 44 comprises a plurality of connection recesses 441 recessed in a direction facing the cover 41. The connection recesses 441 are connected and fixed to the cover 41 such that the fourth support member 44 forms a plurality of connections with the cover 41 through the plurality of the connection recesses 441, making a force distribution between the fourth support member 44 and the cover 41 more uniform, thereby improving stability and reliability of a connection between the fourth support member 44 and the cover 41.

The fourth support member 44 comprises a plate member. For example, the fourth support member 44 is a sheet metal member formed by bending, stamping, drawing, or other processes to form the plurality of the connection recesses 441.

For example, the fourth support member 44 comprises a plurality of first segments 442, and the first segments 442 and the connection recesses 441 arrange alternately along a length direction of the fourth support member 44. Each connection recess 441 comprises a second segment 4411 and a plurality of third segments 4412, the second segment 4411 is connected to the cover 41, an end of each third segment 4412 bends and is connected to an adjacent one of the second segments 4411, and another end of each third segment 4412 bends and is connected to an adjacent one of the first segments 442.

In other words, the fourth support member 44 forms a plurality of arch-shaped structures bending toward the cover 41 through the plurality of the second segments 4411 and the plurality of the third segments 4412. Thus, while keeping the fourth support member 44 thin to reduce a weight of the battery pack, embodiments of the present application also enhance a strength of the fourth support member 44 such that the fourth support member 44 more stably supports the panel 43.

In some embodiments, the cover assembly 400 further comprises a first fastener 45. The first fastener 45 connects the cover 41 to the housing 300, enabling the cover 41 to install stably and reliably to the housing 300.

In some embodiments, at least a portion of the first fastener 45 passes through the connection recess 441 to fix the connection recess 441 to the cover 41. This can be understood as the first fastener 45 being reused for connecting and fixing both the cover 41 and the fourth support member 44, reducing a number of parts in the cover assembly 400, thereby lowering manufacturing and assembly difficulty of the cover assembly 400.

In some embodiments, in the same fourth support member 44, a plurality of connection recesses 441 are arranged along an edge of the cover 41, and a spacing between adjacent two of the connection recesses 441 ranges from 80 mm to 100 mm.

This prevents the spacing between adjacent two of the connection recesses 441 from being too large, which could lead to insufficient strength of the fourth support member 44, and prevents the spacing between adjacent two of the connection recesses 441 from being too small, which could increase processing steps and difficulty for the fourth support member 44.

For example, the spacing between adjacent two of the connection recesses 441 is 80 mm, 83 mm, 84.7 mm, 85 mm, 89 mm, 89.3 mm, 90 mm, 90.07 mm, 92 mm, 93 mm, 94.5 mm, 95 mm, 96.7 mm, 98 mm, 98.97 mm, 99 mm, 99.5 mm, or 100 mm, and embodiments of the present application impose no limitation thereon.

In some embodiments, in the same fourth support member 44, each connection recess 441 is provided with the first fastener 45, preventing a spacing between the first fasteners 45 from being too large, which could reduce stability of a connection between the cover 41 and the housing 300 and airtightness between the cover 41 and the housing 300.

In some embodiments, in the same fourth support member 44, no first fastener 45 is disposed between adjacent two of the connection recesses 441, preventing a spacing between the first fasteners 45 from being too small, which could result in an excessive number of the first fasteners 45, thereby avoiding increased assembly difficulty and cost for the cover assembly 400.

In some embodiments, at a same side edge of the housing 300, a number of first segments 442 between adjacent two of the first fasteners 45 is less than or equal to 1, preventing a spacing between the first fasteners 45 from being too small, which could result in an excessive number of first fasteners 45, thereby avoiding increased assembly difficulty for the cover assembly 400.

The first fastener 45 comprises a fastening screw, such as an M5-sized fastening screw, or the first fastener 45 comprises a rivet or the like, and embodiments of the present application impose no limitation thereon.

In some embodiments, the cover assembly 400 further comprises a second fastener 46, and the second fastener 46 connects the first segment 442 to the panel 43. The second fastener 46 comprises a fastening screw, such as an M5-sized fastening screw, or the first fastener 45 comprises a rivet or the like, and embodiments of the present application impose no limitation thereon.

In some embodiments, the cover assembly 400 further comprises a third fastener, which passes through the panel 43 and the cover 41 and is connected to the housing 300 to fix both the panel 43 and the cover 41 to the housing 300. This can be understood as the third fastener being reused for connecting and fixing the panel 43 to the housing 300 in addition to connecting and fixing the cover 41 to the housing 300, reducing a number of parts in the cover assembly 400, thereby lowering manufacturing and assembly difficulty of the cover assembly 400.

For example, the third fastener passes through the panel 43, the connection recess 441, and the cover 41 and is connected to the housing 300, thereby securely fixing the panel 43, the fourth support member 44, and the cover 41 to the housing 300. In this case, it can be understood that at least a portion of the first fastener 45 forms the third fastener.

For example, the third fastener passes through the panel 43, the first segment 442, and the cover 41 and is connected to the housing 300, thereby securely fixing the panel 43, the fourth support member 44, and the cover 41 to the housing 300. In this case, it can be understood that at least a portion of the second fastener 46 forms the third fastener.

Alternatively, in some other embodiments, the third fastener does not pass through the fourth support member 44, and embodiments of the present application impose no limitation thereon.

In some embodiments, a thickness of the fourth support member 44 ranges from 1 mm to 2 mm, preventing the thickness of the fourth support member 44 from being too small, which could lead to insufficient rigidity, and preventing the thickness of the fourth support member 44 from being too large, which could reduce the energy density of the battery pack.

For example, the thickness of the fourth support member 44 is 1 mm, 1.1 mm, 1.27 mm, 1.3 mm, 1.5 mm, 1.67 mm, 1.79 mm, 1.85 mm, 1.9 mm, or 2 mm, and embodiments of the present application impose no limitation thereon.

The above provides exemplary descriptions of the fourth support member 44 in embodiments of the present application. The following continues to provide exemplary descriptions of embodiments of the present application in conjunction with a structure of the panel 43.

In some embodiments, the second buffer layer 42 is disposed only at one end of the cover 41 along a length direction. Thus, disposing the second buffer layer 42 and the panel 43 only at one end of the cover 41 along the length direction meets a stepping requirement of an installer during an installation process while reducing material consumption of the second buffer layer 42 and the panel 43, thereby lowering an overall weight and manufacturing cost of the battery pack.

In some embodiments, the panel 43 is provided with a reinforcing structure to enhance a rigidity of the panel 43.

For example, the reinforcing structure comprises a first protrusion 431 protruding in a direction away from the second buffer layer 42, and a height of the first protrusion 431 ranges from 2 mm to 3 mm, preventing the height of the first protrusion 431 from being too small, which could lead to insufficient rigidity, and preventing the height of the first protrusion 431 from being too large, which could reduce the energy density of the battery pack.

For example, a height of a first convex portion 4312 is 2 mm, 2.1 mm, 2.27 mm, 2.3 mm, 2.5 mm, 2.67 mm, 2.79 mm, 2.85 mm, 2.9 mm, or 3 mm, and embodiments of the present application impose no limitation thereon.

In some embodiments, the first protrusion 431 comprises a first rib 4311 and a plurality of first convex portions 4312. The first rib 4311 extends along a length direction of the panel 43, and each side of the first rib 4311 in a width direction is provided with a plurality of first convex portions 4312 arranged.

It is understood that as a length of the panel 43 increases, a rigidity of various positions along the length direction of the panel 43 relatively decreases. Thus, the first rib 4311 extending along the length direction of the panel 43 enhances the rigidity of various positions along the length direction of the panel 43. Additionally, the plurality of the first convex portions 4312 ensures higher rigidity at various positions in a width direction of the panel 43. Thus, when an installer steps on the panel 43, a combination of the first rib 4311 and the plurality of the first convex portions 4312 distributes a force on the panel 43 more evenly.

In some embodiments, a ratio of a length of the first rib 4311 to a length of the panel 43 is greater than or equal to 0.7, ensuring that a sufficiently long first rib 4311 enhances the rigidity of various positions along the length direction of the panel 43.

For example, the ratio of the length of the first rib 4311 to the length of the panel 43 is 0.7, 0.74, 0.76, 0.799, 0.8, 0.85, 0.869, 0.88, 0.892, 0.91, 0.95, or 1, and embodiments of the present application impose no limitation thereon.

In some embodiments, on at least one side of the first rib 4311 in a width direction, the first convex portions 4312 are arranged along a length direction of the first rib 4311, and the first convex portions 4312 are spaced apart from the first rib 4311 to form a first groove 432 between the first rib 4311 and the plurality of the first convex portions 4312. A second groove 433 is formed between adjacent two of the first ribs 4311, one end of the second groove 433 communicates with the first groove 432, and another end of the second groove 433 communicates with an outer peripheral side of the panel 43.

In other words, the first protrusion 431 defines a drainage groove on a side of the panel 43 facing away from the second buffer layer 42, preventing liquid accumulation on an upper surface of the panel 43 during an assembly process or subsequent use, which could pose a safety hazard to the battery pack. The drainage groove comprises the first groove 432 and the second groove 433.

In some embodiments, the first protrusion 431 further comprises a second rib 4313, and each side edge of the panel 43 in a length direction is provided with the second rib 4313. Each end of the first rib 4311 is connected to the second rib 4313 on one side. The first convex portions 4312 are located between the second ribs 4313 on both sides. Thus, it is understood that when the panel 43 is stepped on, a deformation amount is typically larger at peripheral edges. Therefore, a cooperation of the second rib 4313 and the first rib 4311 enhances a strength at edges of the panel 43.

In some embodiments, a shape of a side surface of the panel 43 facing the second buffer layer 42 matches a shape of a side surface of the second buffer layer 42 facing the panel 43 such that various positions of the panel 43 contact the second buffer layer 42, ensuring that various positions of the panel 43 receive good support and buffering from the second buffer layer 42, thereby enabling a force received by the panel 43 to transfer uniformly to the cover 41 through the second buffer layer 42.

For example, the side surface of the second buffer layer 42 facing the panel 43 is provided with a second protrusion 421, and a shape of the second protrusion 421 matches a shape of the first protrusion 431 to embed in a side of the first protrusion 431 facing the second buffer layer 42.

In some embodiments, a thickness of the second buffer layer 42 is D5, a sum of thicknesses of the cover 41, the second buffer layer 42, and the panel 43 is D6, and a ratio of D5 to D6 is greater than or equal to 2:3, ensuring that the second buffer layer 42 is not too thin to provide sufficient buffering effect for the cover assembly 400.

In some embodiments, the ratio of D5 to D6 is less than or equal to 7:8, preventing the second buffer layer 42 from being too thick, which could reduce the energy density of the battery pack.

For example, the ratio of D5 to D6 is 2:3, 3:4, 4:5, 5:6, 6:7, or 7:8, and embodiments of the present application impose no limitation thereon.

In some embodiments, a thickness of the buffer layer is D5, a thickness of the cover is D7, and a ratio of D5 to D7 is greater than or equal to 4, ensuring that the second buffer layer 42 is not too thin to provide sufficient buffering effect for the cover assembly 400.

In some embodiments, the ratio of D5 to D7 is less than or equal to 15, preventing the second buffer layer 42 from being too thick, which could reduce the energy density of the battery pack.

For example, the ratio of D5 to D7 is 4, 4.5, 5, 5.7, 6, 6.9, 8, 9.5, 10.01, 11, 12.3, 13.8, 14, 14.5, or 15, and embodiments of the present application impose no limitation thereon.

Referring to FIG. 9, in some embodiments, the housing 300 is provided with a first positioning structure 32, the first heat exchange component 21 is provided with a second positioning structure 211, and the first positioning structure 32 cooperates with the second positioning structure 211 to position the first heat exchange component 21 during covering the first heat exchange component 21 onto the cell assembly 100.

It is understood that in related art, an operator manually covers the first heat exchange component 21 onto the cell assembly 100 to install the first heat exchange component 21, and no positioning structure guides or positions the first heat exchange component 21 and the cell assembly 100, which easily leads to positional deviation when covering the first heat exchange component 21 onto the cell assembly 100. In contrast, in embodiments of the present application, a cooperation of the first positioning structure 32 and the second positioning structure 211 achieves positioning during an installation process of the first heat exchange component 21, thereby mitigating a technical problem of low positional accuracy in installing the first heat exchange component 21.

It is also understood that improving the positional accuracy of installing the first heat exchange component 21 enables the first heat exchange component 21 to provide better heat exchange effects more accurately to various positions of the cell assembly 100, preventing significant temperature differences among different positions of the battery cell 11, thereby improving a service life and reliability of the battery pack.

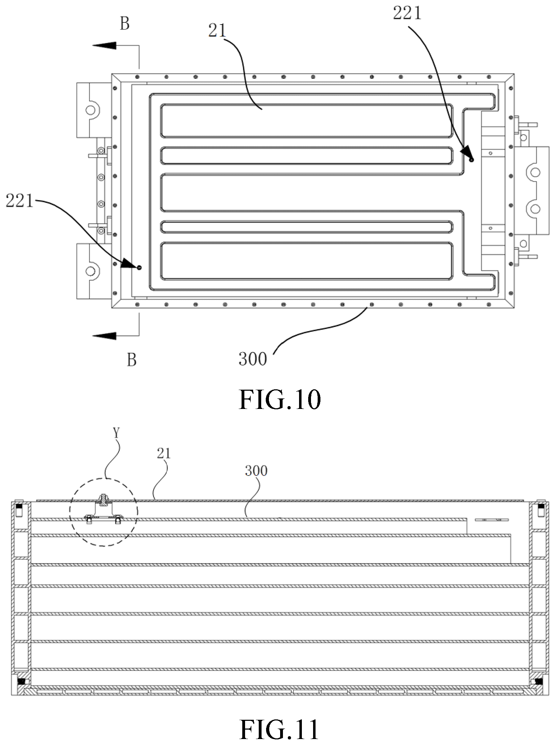

Referring to FIGs. 10, 11, and 12, one of the first positioning structure 32 and the second positioning structure 211 comprises a first positioning hole 211a, and the other of the first positioning structure 32 and the second positioning structure 211 comprises a first positioning post 321, and the first positioning post 321 passes through the first positioning hole 211a. Thus, during an installation process, inserting the first positioning post 321 into the first positioning hole 211a facilitates and quickly achieves positioning of the first heat exchange component 21 and also achieves preliminary fixing of the first heat exchange component 21.

Alternatively, in some other embodiments, one of the first positioning structure 32 and the second positioning structure 211 comprises a first positioning groove, and the other of the first positioning structure 32 and the second positioning structure 211 comprises a first positioning rib, and the first positioning rib engages with the first positioning groove, and embodiments of the present application impose no limitation thereon.

In the following, embodiments of the present application primarily describe a technical solution of embodiments of the present application in conjunction with a structure of the first positioning post 321 and the first positioning hole 211a for illustrative purposes.

In some embodiments, the first positioning structure 32 further comprises a positioning bracket 322. The positioning bracket 322 is installed to the housing 300, and the first positioning post 321 protrudes from a side of the positioning bracket 322 facing the first heat exchange component 21. Thus, in an actual assembly process, the first positioning post 321 first is installed to the positioning bracket 322 such that the positioning bracket 322 installs the first positioning post 321 to the housing 300 more stably and reliably. Compared to integrally forming the first positioning post 321 on the housing 300, a separate forming method reduces a forming difficulty of the first positioning post 321.

In some embodiments, the first positioning post 321 is provided with a first locking component 323, and the first heat exchange component 21 is locked between the first locking component 323 and the positioning bracket 322. Thus, after the first heat exchange component 21 installs in place, the first locking component 323 locks the first heat exchange component 21 to prevent displacement or detachment of the first heat exchange component 21 during subsequent use.

Additionally, it is understood that the first positioning post 321 is reused for positioning guidance during an installation process of the first heat exchange component 21 and for locking and fixing the first heat exchange component 21 after installation, reducing an overall number of parts in the battery pack, making an interior of the battery pack more compact, thereby improving the energy density of the battery pack and reducing an assembly difficulty of the battery pack.

For example, the first positioning post 321 is provided with an external thread, and the first locking component 323 comprises a nut such that the first locking component 323 is threadedly connected to the first positioning post 321.

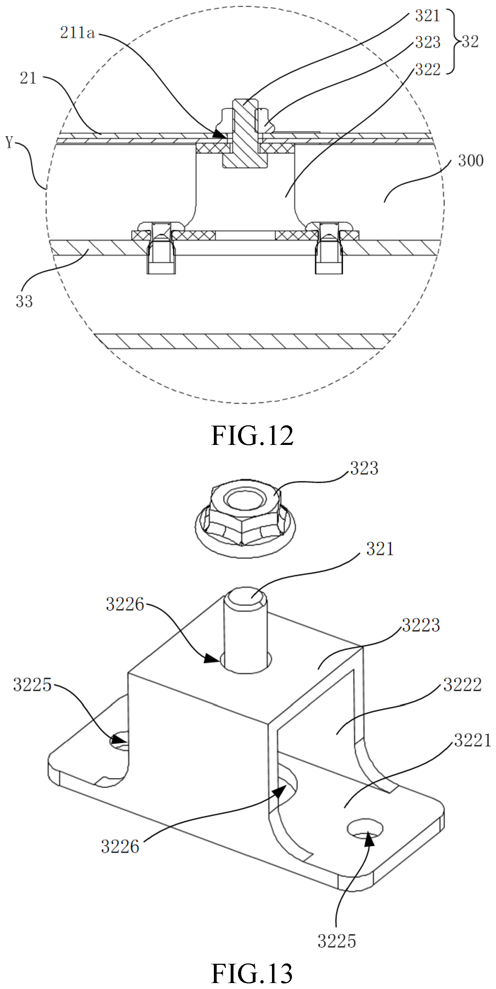

Referring to FIG. 13, in some embodiments, the positioning bracket 322 comprises a bracket base plate 3221, a bracket side plate 3222, and a bracket top plate 3223. The bracket base plate 3221 is connected and fixed to the housing 300. An end of the bracket side plate 3222 is connected and fixed to the bracket base plate 3221. The bracket top plate 3223 is connected to a side of the bracket side plate 3222 away from the bracket base plate 3221, and the bracket top plate 3223 is connected and fixed to the first positioning post 321.

Thus, on one hand, the positioning bracket 322 increases a contact area with the housing 300 through the bracket base plate 3221, enabling stable installation to the housing 300; on the other hand, the positioning bracket 322 more stably supports the first heat exchange component 21 through the bracket top plate 3223. Compared to a solid block structure for the positioning bracket 322, a hollow structure where the bracket side plate 3222 connects the bracket base plate 3221 and the bracket top plate 3223 makes the positioning bracket 322 lighter, reducing an overall weight of the battery pack.

In some embodiments, the first positioning post 321 is riveted or welded to the bracket top plate 3223, improving stability and reliability of an installation of the first positioning post 321, thereby ensuring stability and reliability of an installation of the first heat exchange component 21.

In some embodiments, the bracket base plate 3221 is provided with a first installation hole 3224 facing the first positioning post 321. A diameter of the first installation hole 3224 is greater than a maximum outer diameter of the first positioning post 321 such that the first positioning post 321 is installed to the bracket top plate 3223 via the first installation hole 3224.

For example, the bracket top plate 3223 is provided with a third installation hole 3226, the third installation hole 3226 corresponds to the first installation hole 3224, and the first positioning post 321 passes through the first installation hole 3224.

Thus, taking riveting fixing of the first positioning post 321 as an example, first, a riveting device clamps the bracket base plate 3221 to fix the positioning bracket 322; then, a riveting head of the riveting device carries the first positioning post 321 through the first installation hole 3224 and rivets the first positioning post 321 to the third installation hole 3226. Correspondingly, the first positioning post 321 comprises a press-riveting bolt, such as an M5-sized press-riveting bolt.

Taking welding fixing of the first positioning post 321 as an example, first, a welding device clamps the bracket base plate 3221 to fix the positioning bracket 322; then, the welding device drives the first positioning post 321 through the first installation hole 3224 until the first positioning post 321 passes through the third installation hole 3226; finally, a welding head of the welding device welds and fixes the first positioning post 321 to the third installation hole 3226. Correspondingly, the first positioning post 321 comprises a projection welding bolt, such as an M5-sized projection welding bolt.

Thus, the bracket base plate 3221 in embodiments of the present application provides an advantage of easy clamping for automated devices, while the third installation hole 3226 on the bracket base plate 3221 provides good guiding and positioning effects for working heads of automated devices such as riveting or welding devices, enabling the working heads of the automated devices to accurately install the first positioning post 321 to the positioning bracket 322, ultimately improving positional accuracy of installing the first heat exchange component 21.

In some embodiments, a second installation hole 3225 is provided in each of two ends of the bracket base plate 3221 in a length direction to install and fix the bracket base plate 3221 to the housing 300, and the bracket side plate 3222 is located at a middle protruding from the bracket base plate 3221 in the length direction, thereby preventing the bracket side plate 3222 and/or a bracket top wall connected to the bracket side plate 3222 from interfering with an installation at the second installation hole 3225. Since both ends of the bracket base plate 3221 in the length direction are connected and fixed to the housing 300, a force distribution on a bracket base is more uniform and reasonable.

In some embodiments, the bracket base plate 3221 is riveted or screwed to the housing 300 through the second installation hole 3225. For example, the bracket base plate 3221 is riveted to the second installation hole 3225 using an M5-sized blind rivet, and embodiments of the present application impose no limitation thereon.

In some embodiments, the positioning bracket 322 comprises an aluminum profile. For example, the positioning bracket 322 comprises an aluminum extrusion formed by an extrusion process, followed by punching, blanking, or computer numerical control (CNC) machining. Alternatively, the positioning bracket 322 comprises steel or any other material, and embodiments of the present application impose no limitation thereon.

In some embodiments, the housing 300 is further provided with an installation portion 33, the installation portion 33 is located within the accommodation space, and the first positioning structure 32 is installed to the installation portion 33, thereby preventing a connection between the first positioning structure 32 and the housing 300 from being exposed to ensure stability and reliability of the first positioning structure 32.

For example, the installation portion 33 protrudes from an inner wall of the accommodation space, and the positioning bracket 322 of the first positioning structure 32 (e.g., the bracket base plate 3221 of the positioning bracket 322) is installed to the installation portion 33.

The above provides exemplary descriptions of a connection method between the first positioning post 321 and the housing 300 in embodiments of the present application. The following continues to provide exemplary descriptions of embodiments of the present application in conjunction with the first positioning hole 211a.

In some embodiments, a quantity of the first positioning hole 211a is at least two. It is understood that if only one first positioning hole 211a is provided, after the first positioning post 321 passes through the first positioning hole 211a, the first heat exchange component 21 still has a degree of freedom to rotate around an axis of the first positioning post 321. Thus, in embodiments of the present application, providing at least two first positioning holes 211a restricts a rotational degree of freedom of the first heat exchange component 21, further improving positional accuracy of installing the first heat exchange component 21.

In some embodiments, at least one of the first positioning holes 211a comprises a waist-shaped hole. Taking the first positioning hole 211a disposed on the first heat exchange component 21 as an example, if a spacing between two first positioning holes 211a has a certain error during a machining process of the first heat exchange component 21, the first positioning post 321 corresponding to the waist-shaped hole passes through different positions on the waist-shaped hole, preventing an inability to install the first heat exchange component 21.

In some embodiments, at least one of the first positioning holes 211a comprises a circular hole, ensuring positional accuracy of installing the first heat exchange component 21 through the circular hole. The circular hole may have a diameter of φ7 or other sizes, and embodiments of the present application impose no limitation thereon.

In some embodiments, the quantity of the first positioning hole 211a can be two, ensuring accuracy of positioning the first heat exchange component 21 while avoiding a need for excessive positioning brackets 322 and first positioning posts 321, which could increase a cost and installation difficulty of the battery pack.

In some embodiments, each end of the first heat exchange component 21 in a length direction is provided with the second positioning structure 211. Thus, during an installation process, both ends of the first heat exchange component 21 receive good positioning effects, and after installation, both ends of the first heat exchange component 21 receive good fixing effects.

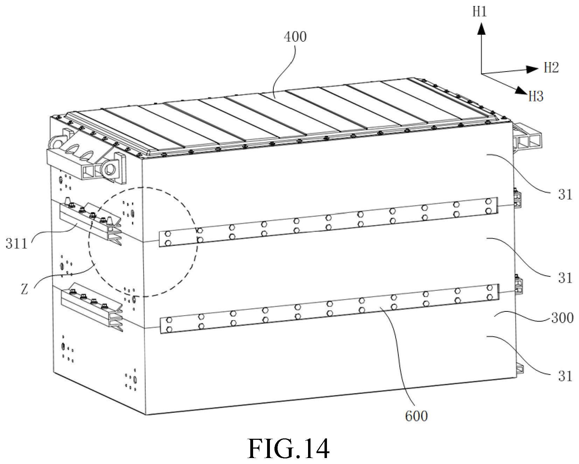

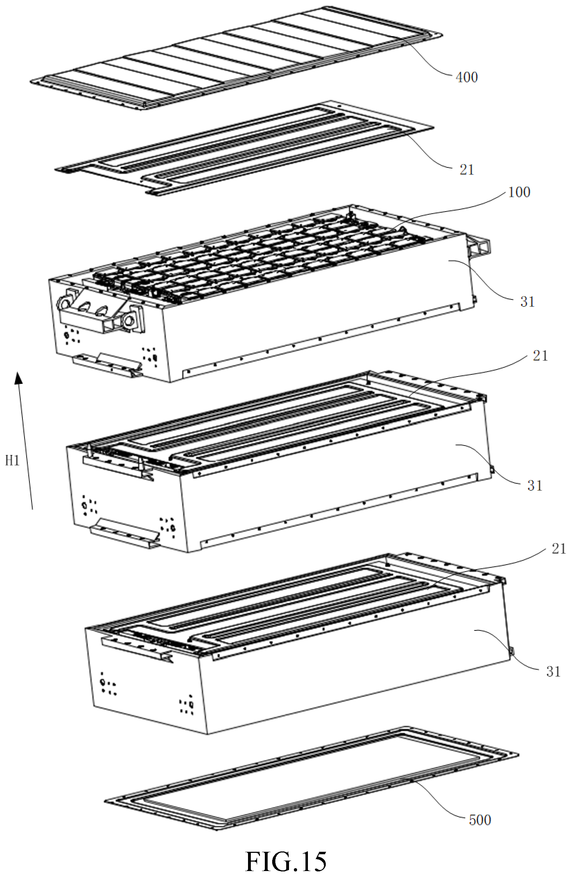

Referring to FIGs. 14 and 15, in some embodiments, the housing 300 comprises a plurality of sub-housings 31, the plurality of the sub-housings 31 stack along a first direction H1, and one cell assembly 100 is provided in each sub-housing 31.

Thus, stacking a plurality of sub-housings 31 increases a number of cell assemblies 100 in the battery pack, enhancing an energy storage capacity of the battery pack. Additionally, by installing some cell assemblies 100 in each sub-housing 31, each sub-housing 31 and a corresponding cell assembly 100 form a small unit or module during an assembly process, reducing an installation difficulty of each small unit or module. Finally, assembling a plurality of small units or modules reduces an assembly difficulty of a large number of cell assemblies 100.

In some embodiments, along the first direction H1, a sub-housing 31 at an outermost end installs with the cover assembly 400, and another sub-housing 31 installs with a bottom cover 500.

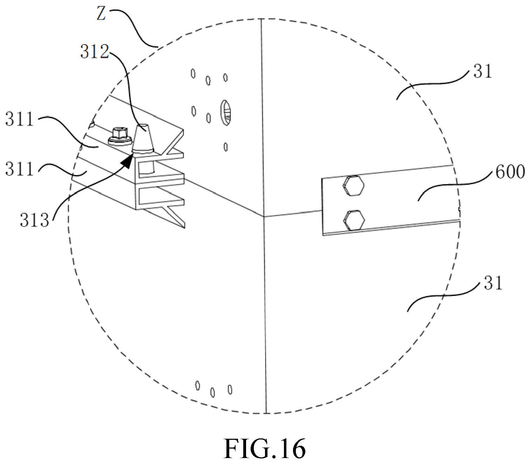

Referring to FIG. 16, in some embodiments, the battery pack further comprises at least one connecting plate 600, and an outer wall of adjacent two of the sub-housings 31 is connected to the connecting plate 600, enhancing stability and reliability of a connection between the adjacent two of the sub-housings 31 through the connecting plate 600.

The connecting plate 600 and the sub-housing 31 connect by bolting, riveting, or welding, and embodiments of the present application impose no limitation thereon.

In some embodiments, an outer wall of the sub-housing 31 protrudes with a fixing ear 311, and the fixing ears 311 of adjacent two of the sub-housings 31 are connected and fixed together, enhancing stability and reliability of a connection between the adjacent two of the sub-housings 31 through the fixing ear 311.

The fixing ears 311 connect by bolting, riveting, or welding, and embodiments of the present application impose no limitation thereon.

In some embodiments, among adjacent two of the fixing ears 311, one fixing ear 311 is provided with a second positioning post 312, and another is provided with a second positioning hole 313, and the second positioning post 312 passes through the second positioning hole 313, improving positional accuracy of installing adjacent two of the sub-housings 31.

In some embodiments, an outer wall of the sub-housing 31 is connected to the connecting plate 600 on at least one side along a second direction H2, and the outer wall of the sub-housing 31 protrudes with the fixing ear 311 on at least one side along a third direction H3. The first direction H1, the second direction H2, and the third direction H3 are mutually perpendicular.

For example, the first direction H1 is a height direction of the battery pack, the second direction H2 is a width direction of the battery pack, and the third direction H3 is a length direction of the battery pack, ensuring stable and reliable connection and fixing on each side surface of adjacent two of the sub-housings 31. The specific directions of the first direction H1, the second direction H2, and the third direction H3 are interchangeable, and embodiments of the present application impose no limitation thereon.

Embodiments of the present application also provide an electrical device, which comprises the battery pack described above.

The electrical device includes, but is not limited to, a vehicle, a smart wearable device, a mobile terminal, a home appliance, or a medical device, and embodiments of the present application impose no limitation thereon. A vehicle includes, but is not limited to, a car, a bus, a train, a ship, an aircraft, and the like. A smart wearable device includes, but is not limited to, a smart watch, a smart bracelet, a cervical massager, and the like. A mobile terminal includes, but is not limited to, a smartphone, a laptop, a tablet, a point-of-sale (POS) terminal. A home appliance includes, but is not limited to, a television, a washing machine, an air conditioner, a rice cooker, a smart vacuum cleaner, a smart lamp, and the like. A medical device includes, but is not limited to, an infrared thermometer, a pulse oximeter, a body composition analyzer, and the like.

## Claims

1. A battery pack, comprising:
a cell assembly (100), wherein the cell assembly (100) comprises a plurality of battery cells (11), a side surface of each battery cell (11) where an output terminal (111) is located comprises a functional region (112) and a non-functional region (113), and at least one of the output terminal (111), a liquid injection port, or an explosion-proof valve is provided in the functional region (112); and
a heat exchange assembly (200), wherein the heat exchange assembly (200) comprises a first heat exchange component (21) and a first support member (222), the first heat exchange component (21) is disposed on a side of the battery cell (11) where the output terminal (111) is located, a side of the first support member (222) abuts the first heat exchange component (21) adjacent thereto, and another side of the first support member (222) abuts the non-functional region (113) of an adjacent one of the battery cells (11).

2. The battery pack according to claim 1, wherein the cell assembly (100) comprises at least two columns of the battery cells (11), and the first support member (222) laps adjacent two of the at least two columns of the battery cells (11).

3. The battery pack according to claim 2, wherein each side of the first support member (222) in a width direction laps a column of the battery cells (11); and
along the width direction of the first support member (222), a width of a portion of the first support member (222) lapping each column of the battery cells (11) is greater than or equal to 3 mm.

4. The battery pack according to claim 1, wherein a quantity of the cell assembly (100) is at least two, and all of the cell assemblies (100) are arranged along a vertical direction; and
the heat exchange assembly (200) further comprises a second support member (223), and the second support member (223) is located between the first heat exchange component (21) and the cell assembly (100) at a top.

5. The battery pack according to claim 4, wherein the heat exchange assembly (200) further comprises at least two second heat exchange components (23), and a second heat exchange component (23) is provided on a side of each cell assembly (100) facing away from the first heat exchange component (21) for heat exchange; and
the second support member (223) is interposed between the first heat exchange component (21) adjacent thereto and a second heat exchange component (23).

6. The battery pack according to claim 5, wherein a structural strength of the second heat exchange component (23) is greater than a structural strength of the first heat exchange component (21).

7. The battery pack according to claim 6, wherein the first heat exchange component (21) comprises a stamped plate, and the stamped plate forms a flow channel for a cooling medium to flow; and/or
the second heat exchange component (23) comprises an extruded plate, and a flow channel for a cooling medium to flow is formed in the extruded plate; and/or
a thickness of the second heat exchange component (23) is greater than a thickness of the first heat exchange component (21); and/or
the first support member (222) and/or the second support member (223) abuts a non-flow-channel region of the first heat exchange component (21) adjacent thereto; and/or
the second support member (223) comprises a first buffer layer (221), and the first buffer layer (221) abuts the second heat exchange component (23): and/or
along the vertical direction, a height by which the second support member (223) protrudes from the first heat exchange component (21) connected thereto is greater than or equal to 2 mm; and/or
along the vertical direction, a gap between adjacent two of the cell assemblies (100) is D1, a height of the second support member (223) is D2, and a ratio of D1 to D2 ranges from 13:4 to 13:5; and/or
along the vertical direction, a gap between adjacent two of the cell assemblies (100) is D1, a sum of a height of adjacent two of the cell assemblies (100) and the gap between adjacent two of the cell assemblies (100) is D3, and a ratio of D1 to D3 ranges from 3:20 to 1:15; and/or
along the vertical direction, a gap between adjacent two of the cell assemblies (100) is D1, a height of the first support member (222) is D4, and a ratio of D1 to D4 ranges from 13:6 to 13:7; and/or
the first support member (222) and/or the second support member (223) is a strip-shaped support member.

8. The battery pack according to claim 4, wherein the heat exchange assembly (200) further comprises a third support member (224), and the third support member (224) passes through the first heat exchange component (21) and is interposed between adjacent two of the cell assemblies (100).

9. The battery pack according to claim 1, wherein a quantity of the cell assembly (100) is at least two, and all of the cell assemblies (100) are arranged along a first direction (H1); each cell assembly (100) comprises a plurality of columns of the battery cells (11), the plurality of the columns of the battery cells (11) in the same one of the cell assemblies (100) are arranged along a second direction (H2), the plurality of the battery cells (11) in a same column are arranged along a third direction (H3), and the first direction (H1), the second direction (H2), and the third direction (H3) intersect pairwise;
wherein a quantity of the first support member (222) is multiple, at least two of the first support members (222) are spaced apart along the second direction (H2), and each first support member (222) extends along the third direction (H3).

10. The battery pack according to claim 9, wherein a first gap (13) is defined between adjacent two of the columns of the battery cells (11) in the same one of the cell assemblies (100), and at least one first support member (222) corresponds to at least one first gap (13) along the first direction (H1).

11. The battery pack according to any one of claims 1 to 10, wherein the first support member (222) extends along a length direction of the cell assembly (100), and a ratio of a length of the first support member (222) to a length of the cell assembly (100) is greater than or equal to three-fifths.

12. The battery pack according to any one of claims 1 to 10, wherein the battery pack comprises a plurality of sub-housings (31), all of the sub-housings (31) stack along a first direction (H1), and one cell assembly (100) is provided in each sub-housing (31).

13. The battery pack according to any one of claims 1 to 10, wherein the cell assembly (100) further comprises a busbar (12), and the battery cell (11) is connected electrically to the busbar (12);
wherein the first heat exchange component (21) is connected to a terminal post or the busbar (12) of the cell assembly (100) adjacent thereto via a thermally conductive adhesive.

14. The battery pack according to any one of claims 1 to 10, wherein the battery pack further comprises a housing (300), the housing (300) has an accommodation space, and the cell assembly (100) is at least partially disposed in the accommodation space; and
a first positioning structure (32) is provided on the housing (300), a second positioning structure (211) is provided on the first heat exchange component (21), and the first positioning structure (32) cooperates with the second positioning structure (211) to position the first heat exchange component (21) during covering the first heat exchange component (21) onto the cell assembly (100).

15. The battery pack according to claim 14, wherein one of the first positioning structure (32) and the second positioning structure (211) comprises a first positioning hole (211a), and the other of the first positioning structure (32) and the second positioning structure (211) comprises a first positioning post (321), and the first positioning post (321) passes through the first positioning hole (211a).

16. The battery pack according to claim 15, wherein the first positioning structure (32) further comprises a positioning bracket (322), the positioning bracket (322) is installed to the housing (300), and the first positioning post (321) protrudes from a side of the positioning bracket (322) facing the first heat exchange component (21).

17. The battery pack according to claim 16, wherein a first locking component (323) is provided on the first positioning post (321), and the first heat exchange component (21) is locked between the first locking component (323) and the positioning bracket (322).

18. The battery pack according to claim 16, wherein the positioning bracket (322) comprises:
a bracket base plate (3221), wherein the bracket base plate (3221) is connected and fixed to the housing (300);
a bracket side plate (3222), wherein an end of the bracket side plate (3222) is connected and fixed to the bracket base plate (3221); and
a bracket top plate (3223), wherein the bracket top plate (3223) is connected to a side of the bracket side plate (3222) away from the bracket base plate (3221), and the bracket top plate (3223) is connected and fixed to the first positioning post (321).

19. The battery pack according to claim 18, wherein a first installation hole (3224) facing the first positioning post (321) is provided in the bracket base plate (3221), a diameter of the first installation hole (3224) is greater than a maximum outer diameter of the first positioning post (321) such that the first positioning post (321) is installed to the bracket top plate (3223) via the first installation hole (3224); the first positioning post (321) is riveted or welded to the bracket top plate (3223); and/or
a second installation hole (3225) is provided in each of two ends of the bracket base plate (3221) in a length direction to install and fix the bracket base plate (3221) to the housing (300), and the bracket side plate (3222) is located at a middle protruding from the bracket base plate (3221) in the length direction.

20. The battery pack according to claim 15, wherein a quantity of the first positioning hole (211a) is at least two, at least one of the first positioning holes (211a) comprises a waist-shaped hole, and at least one of the first positioning holes (211a) comprises a circular hole; and/or
a quantity of the first positioning hole (211a) is at least two, and the second positioning structure (211) is provided at each end of the first heat exchange component (21) in a length direction.

21. The battery pack according to any one of claims 1 to 10, wherein the battery pack further comprises:
a housing (300), wherein the housing (300) has an accommodation space and an opening communicating with the accommodation space, and the cell assembly (100) is at least partially disposed in the accommodation space; and
a cover assembly (400), wherein the cover assembly (400) comprises a cover (41) and a second buffer layer (42), the cover (41) is connected to the housing (300) to seal the opening, the second buffer layer (42) is disposed on a side of the cover (41) facing away from the accommodation space, and a buffering performance of the second buffer layer (42) is greater than a buffering performance of the cover (41).

22. The battery pack according to claim 21, wherein the cover assembly (400) further comprises a panel (43), the panel (43) is disposed on a side of the second buffer layer (42) facing away from the cover (41), and a rigidity of the panel (43) is greater than a rigidity of the second buffer layer (42).

23. The battery pack according to claim 22, wherein the cover assembly (400) further comprises a fourth support member (44), the fourth support member (44) is connected between the cover (41) and the panel (43), and a rigidity of the fourth support member (44) is greater than the rigidity of the second buffer layer (42).

24. The battery pack according to claim 23, wherein a quantity of the fourth support member (44) is at least two, and the fourth support member (44) is provided on each side of the second buffer layer (42) in a width direction and/or each side of the second buffer layer (42) in a length direction.

25. The battery pack according to claim 23, wherein the fourth support member (44) bends, the fourth support member (44) comprises a plurality of connection recesses (441) recessed in a direction facing the cover (41), and the connection recesses (441) is connected and fixed to the cover (41).

26. The battery pack according to claim 25, wherein the fourth support member (44) comprises a plurality of first segments (442), and the first segments (442) and the connection recesses (441) arrange alternately along a length direction of the fourth support member (44): and
each connection recess (441) comprises a second segment (4411) and a plurality of third segments (4412), the second segment (4411) is connected to the cover (41), an end of each third segment (4412) bends and is connected to one of the second segments (4411) adjacent thereto, and another end of each third segment (4412) bends and is connected to one of the first segments (442) adjacent thereto.

27. The battery pack according to claim 26, wherein the cover assembly (400) further comprises a first fastener (45), the first fastener (45) connects the cover (41) to the housing (300); at least a portion of the first fastener (45) passes through the connection recess (441) to fix the connection recess (441) to the cover (41);
wherein, in the same fourth support member (44), the plurality of the connection recesses (441) are arranged along an edge of the cover (41), a spacing between adjacent two of the connection recesses (441) ranges from 80 mm to 100 mm, and a first fastener (45) is provided on each connection recess (441); and/or
wherein, in the same fourth support member (44), the plurality of the connection recesses (441) are arranged along an edge of the cover (41), a spacing between adjacent two of the connection recesses (441) ranges from 80 mm to 100 mm, and no first fastener (45) is disposed between adjacent two of the connection recesses (441).

28. The battery pack according to claim 22, wherein a reinforcing structure is provided on the panel (43).

29. The battery pack according to claim 28, wherein the reinforcing structure comprises a first protrusion (431) protruding in a direction away from the second buffer layer (42), the first protrusion (431) comprises a first rib (4311) and a plurality of first convex portions (4312), the first rib (4311) extends along a length direction of the panel (43), and the plurality of the first convex portions (4312) are arranged and provided on each side of the first rib (4311) in a width direction.

30. The battery pack according to claim 29, wherein, on at least one side of the first rib (4311) in a width direction, the first convex portions (4312) are arranged along a length direction of the first rib (4311), and the first convex portions (4312) are spaced apart from the first rib (4311) to form a first groove (432) between the first rib (4311) and the plurality of the first convex portions (4312), a second groove (433) is formed between adjacent two of the first ribs (4311), one end of the second groove (433) communicates with the first groove (432), and another end of the second groove (433) communicates with an outer peripheral side of the panel (43); and/or
wherein the first protrusion (431) further comprises a second rib (4313), the second rib (4313) is provided on each side edge of the panel (43) in a length direction, each end of the first rib (4311) is connected to a second rib (4313) on one side, and the first convex portions (4312) are located between the second ribs (4313) on both sides.

31. An electrical device, comprising the battery pack according to any one of claims 1 to 30.
